# EUROPEAN PATENT APPLICATION

(11) **EP 3 236 310 A1**
(43) Date of publication of application: **25.10.2017**
(21) Application number: 17167202.5
(22) Date of filing: 20.04.2017
(51) Int. Cl.: G03B 11/00, G03B 15/05, G03B 35/00, G03B 37/04, H04N 5/225

(54) **AN IMAGING SYSTEM AND METHOD**

(30) Priority: 22.04.2016 GB 201606996
(71) Applicant: Score Group Plc, Peterhead, Aberdeenshire AB42 0YX (GB)
(72) Inventor: Crawford, Scott, Peterhead, Aberdeenshire AB42 0YX (GB); Jamieson, Ian, Peterhead, Aberdeenshire AB42 0YX (GB)
(74) Representative: Murgitroyd & Company

(57) **Abstract**

An imaging system (1) comprising a source of polarised light (3) an image capturing device (5) located opposite and facing the source of polarised light; and a polarising filter (7) placed in front of the image capturing device; wherein polarisation planes of the source of polarised light and the polarising filter of the image capturing device are oriented at a predetermined angle to each other. A corresponding method, kit of parts as well a module for forming the imaging system are also provided.

## Description

### FIELD OF THE INVENTION

The invention relates to an imaging system and method and in particular an imaging system and method which employ light polarisation in obtaining images.

### BACKGROUND OF THE INVENTION

By using known computer processing techniques, it is possible to convert multiple 2D images of an object into an accurate digital 3D representation of that object.

For a successful 2D to 3D conversion to occur, it is necessary for the object to remain stationary between the capture of the 2D images used to create a 3D image. In order to obtain 2D images, it is preferable to utilise multiple cameras, positioned around the object and configured to capture the images simultaneously or within a short period of time. Such a set-up can also permit moving objects to be captured.

Lighting of the object is critical in such applications, and is typically incorporated into systems to assist in achieving high ISO, low noise camera settings, which are required by the conversion process. In addition, this allows for the use of faster shutter speeds, allowing the capture of moving objects.

In order to light fully a full 360 degree view of an object, it is necessary to use a multitude of lighting sources, many of which inevitably face each other and any associated cameras. This in turn leads to problems with glare and bad quality image capture in cameras which have a full or partial view of a light source.

It is an object of the invention to obviate or mitigate the above drawbacks.

### SUMMARY OF THE INVENTION

According to a first aspect of the present invention, there is provided an imaging system comprising
a source of polarised light
an image capturing device located opposite and facing the source of polarised light; and
a polarising filter placed in front of the image capturing device;
wherein polarisation planes of the source of polarised light and the polarising filter of the image capturing device are oriented at a predetermined angle to each other.

In use, the image capturing device captures images of an object located in an area between the image capturing device and the source of polarised light.

In one arrangement, the polarisation planes of the source of polarised light and the polarising filter of the image capturing device are oriented at an angle between 60 and 120 degrees to each other. In a further arrangement, the polarisation planes of the source of polarised light and the polarising filter of the image capturing device are oriented substantially perpendicular to each other.

In such an arrangement, the polarised light from the source incident directly on the polarising filter of the image capturing device is at least partially, or, in the case where the polarisation planes are oriented perpendicular to each other, fully filtered out by the polarising filter of the image capturing device whereas other light incident on the polarising filter, such as, for example, light reflected from an object positioned in front of the image capturing device, passes through the polarising filter and gets captured by the image capturing device.

Preferably, the system comprises a plurality of such sources of polarised light and a plurality of such image capturing devices wherein one or more of the plurality of sources of polarised light has a respective image capturing device placed opposite and facing the source. Accordingly, in use, the polarised light from the source of polarised light located in front of an image capturing device and incident directly on the polarising filter of the image capturing device is fully or partially filtered out by the polarising filter of the image capturing device. On the other hand, the polarised light from the remaining source or sources of polarised light, i.e. those positioned obliquely in relation to the image capturing device, is reflected by an object positioned in front of that image capturing device before reaching the polarising filter of the image capturing device. This light, upon reflection, undergoes a change in its angle of polarisation and a portion of this light has its angle of polarisation aligned with that of the polarised filter in front of the image capturing device and is thus visible to and captured by the image capturing device.

The plurality of sources of polarised light and the respective image capturing devices can be positioned around a central area into which an object to be scanned is placed in use. The plurality of sources of polarised light and the respective image capturing devices are preferably positioned around the central area so as to capture multiple images of an object around a 360 degree area around the object. Optionally, the plurality of sources of polarised light and the respective image capturing devices can be placed around a circumference or an arc.

Where a plurality of sources of polarised light and image capturing devices are arranged around a central area, the polarisation angle of each of the source of polarised light and the polarising filter of the image capturing device in each adjacent respective source of polarised light and image capturing device may be changed gradually from each respective first source of polarised light and first image capturing device to an nth source of polarised light and an nth first image capturing device such that in each pair of opposing source of polarised light and image capturing device polarisation planes of the source of polarised light and the polarising filter of the image capturing device are oriented at a predetermined angle to each other.

Preferably, the angle of polarisation of light emitted by the source of polarised light and/or the angle of the polarising filter at the image capturing device are individually adjustable. This allows the image capturing device to filter selectively light of any angle of polarisation, allowing the source of polarised light to be visible, such as during calibration, or non-visible, such as during image capturing, to the image capturing device at appropriate times. This also allows brightness of the image background to be adjusted by adjusting the angle of polarisation of the source of polarised light or the polarising filter at the image capturing device. This also allows the source of polarised light to be visible to the image capturing device when required and to display configuration patterns during calibration or image capture, whilst allowing the light from the source of polarised light incident directly on the polarising filter of the image capturing device to be blocked when a photograph is being taken. In addition, by changing the polarisation angle of the polarised filter at the image capturing device and/or the source of polarised light, additional information about the surface of an object being scanned can be obtained by analysing the change in brightness caused by the change in the amount of polarised light reflected by surfaces of the object.

The polarising filter is preferably placed in front of the image capturing device, between the source of polarised light and the image capturing device.

The system preferably includes a support structure supporting the source of polarised light and the image capturing device.

Preferably, height and/or orientation of the source of polarised light and/or the image capturing device within the system are independently adjustable.

Preferably, the source of polarised light and/or the image capturing device are adjustably mounted on the support structure. Preferably, positions of the source of polarised light and the image capturing device are independently adjustable on the support structure. Preferably, the source of polarised light and the polarising filter of the image capturing device are movably mounted on the support structure. Preferably, the source of polarised light and/or the polarising filter of the image capturing device are rotatably mounted on the support structure to adjust their respective angles of polarisation.

A control arrangement is preferably provided configured to control the adjustment of the source of polarised light and/or the image capturing device on the support structure.

Preferably, the source of polarised light is individually adjustable in brightness and/or colour. This allows the source of polarised light to display or project configurable patterns which can be displayed in the background and can be used to calibrate the system and assist in detecting position of the image capturing device and 2D to 3D reconstruction process.

Optionally, the sources of polarised light can be keyed to minimise the filtering of light from the sources located at the same side as the image capturing device (when viewed from above) and reflected from the object being scanned, while ensuring that the light from the source located directly opposite the image capturing device is blocked by the polarising filter of the image capturing device.

The image capturing device may include a camera, a charge-coupled device (CCD) or a scanner.

Where a plurality of the image capturing devices is provided, the image capturing devices are preferably configured to operate synchronously.

The source of polarised light can be a source which emits polarised light either by the inherent design and nature of the light, such as, for example, a light emitting diode (LED) or a diode based array or display, a liquid crystal display (LCD) or a source of non-polarised light and a polarising filter which is capable of polarising light through reflection, transmission or other known techniques. It will be appreciated that various methods of polarisation of light are available and the examples set out herein are not limiting on the present invention.

In one arrangement, the system is a 2D to 3D image building system comprising a processor configured to compile multiple 2D images of an object to create a 3D image of that object.

The use of the source of polarised light to illuminate the object being scanned and polarising filters at the image capturing devices to block either fully or partially the light coming directly from the source and allowing light reflected from the object to enter the image capturing device allows high power lighting to be employed all around the object and removes the issues associated with glare caused by the image capturing device directly facing light sources.

In one arrangement, the system comprises at least one module comprising a body supporting
at least one source of polarised light and
at least one image capturing device having a polarising filter placed in front of the image capturing device.

Thus, in a second aspect, the invention provides one or more modules for use with the system of the first aspect of the present invention, the or each module comprising a body supporting
at least one source of polarised light and
at least one image capturing device having a polarising filter placed in front of the image capturing device.

The system may comprise a plurality of such modules.

Preferably, the system comprises at least a pair of such modules, wherein the modules are disposed facing each other such that
the image capturing device of a first module is located opposite and facing the source of polarised light of the second module to capture images of an object located between the image capturing device of the first module and the source of polarised light of the second module;
wherein polarisation planes of the source of polarised light of the second module and the polarising filter of the image capturing device of the first module are oriented at a predetermined angle relative to each other.

In one arrangement, the polarisation planes of the source of polarised light of the second module and the polarising filter of the image capturing device of the first module are oriented at an angle between 60 and 120 degrees to each other. In a further arrangement, the polarisation planes of the source of polarised light of the second module and the polarising filter of the image capturing device filter of the image capturing device of the first module are oriented substantially perpendicular to each other.

The system may comprise a plurality of such module pairs.

The modules can be arranged around a central area into which an object to be scanned is placed in use. The modules are preferably positioned around the central area so as to capture multiple images of an object around a 360 degree area around the object. Optionally, the plurality of modules can be placed around a circumference or an arc.

Where a plurality of modules are arranged around a central area, the polarisation angle of each of the source of polarised light and the polarising filter of the image capturing device in each adjacent module may be changed gradually from each respective first module to a module located opposite and facing the first module such that in each pair of opposing modules polarisation planes of the source of polarised light of the opposing module and the polarising filter of the image capturing device of the first module are oriented at a predetermined angle to each other.

Preferably, the position of the or each module in the system is adjustable.

The module may comprise a plurality of such sources of polarised light and a plurality of such image capturing devices.

The module may be affixed to the ground via a base plate which supports the body and houses any accompanying power supplies and/or control equipment.

Preferably, the source of polarised light and/or the image capturing device are adjustably mounted on the body of the module. Preferably, positions of the source of polarised light and the image capturing device are independently adjustable on the body of the module. Preferably, the angles of polarisation of the source of polarised light and/or the polarising filter of image capturing device are independently adjustable. Preferably, height and/or orientation of the source of polarised light and/or the image capturing device are independently adjustable. Preferably, the source of polarised light and the polarising filter of the image capturing device are movably mounted on the body. Preferably, the source of polarised light and/or the polarising filter of the image capturing device are rotatably mounted on the body to adjust their respective angles of polarisation.

One or more drives, such as, for example, servo motors, may be provided for adjusting the source of polarised light and the image capturing device.

A control arrangement is preferably provided configured to control the adjustment of the source of polarised light and/or the image capturing device on the body.

In one arrangement, the system forms a photo booth. The photo booth may have walls defined by the modules.

In a third aspect, the invention provides a kit of parts for assembling an imaging system comprising:
a source of polarised light
an image capturing device located opposite and facing the source of polarised light; and
a polarising filter placed in front of the image capturing device;
wherein polarisation planes of the source of polarised light and the polarising filter of the image capturing device are adapted to be oriented at a predetermined angle relative to each other.

The polarisation planes of the source of polarised light and the polarising filter of the image capturing device may be adapted to be oriented at an angle between 60 and 120 degrees to each other or substantially perpendicular to each other.

Preferably, the imaging system is in accordance with the first aspect of the invention.

According to a fourth aspect, there is provided a method of obtaining images, the method comprising the steps of:
providing an imaging system comprising
   a source of polarised light
   an image capturing device having a polarising filter placed in front of the image capturing device;
positioning the image capturing device and the source of polarised light opposite and facing each other; and
orienting polarisation planes of the source of polarised light and the polarising filter of the image capturing device at a predetermined angle relative to each other.

In one arrangement, the predetermined angle is between 60 and 120. In a further arrangement, the polarisation planes of the source of polarised light and the polarising filter of the image capturing device are oriented substantially perpendicular to each other.

The method preferably further comprises the steps of locating an object in an area between the image capturing device and the source of polarised light and capturing one or more images of the object with the image capturing device.

The method comprises, filtering out the polarised light from the source incident directly on the polarising filter of the image capturing device by the polarising filter of the image capturing device. The method preferably further comprises polarising other light incident on the polarising filter, such as, for example, light reflected from an object positioned in front of the image capturing device, by the polarising filter and capturing the polarised light by the image capturing device.

Preferably, the method comprises providing a plurality of such sources of polarised light and a plurality of such image capturing devices and placing a respective image capturing device opposite and facing one or more of the plurality of sources of polarised light. The method preferably comprises filtering out the polarised light from the source of polarised light located in front of an image capturing device and incident directly on the polarising filter of the image capturing device by the polarising filter of the image capturing device; and polarising light from the remaining sources of polarises light reflected from an object positioned in front of the image capturing device by the polarising filter of the image capturing device and capturing the polarised light by the image capturing device.

The method preferably includes positioning the plurality of sources of polarised light and the respective image capturing devices around a central area and placing an object to be scanned into the central area. Preferably, the method includes positioning the plurality of sources of polarised light and the respective image capturing devices around the central area so as to capture multiple images of an object around a 360 degree area around the object. Optionally, the method includes positioning the plurality of sources of polarised light and the respective image capturing devices around a circumference or an arc.

Preferably, the method comprises the step of individually adjusting the angle of polarisation of light emanating from the source of polarised light and/or the angle of the polarising filter at the image capturing device. The method preferably further includes allowing the image capturing device to filter selectively light of any angle of polarisation, allowing the source of polarised light to be visible, such as during calibration, or non-visible, such as during image capturing, to the image capturing device at appropriate times. The method preferably includes adjusting brightness of the image background by adjusting the angle of polarisation of the source of polarised light or the polarising filter at the image capturing device. The method preferably also includes allowing the source of polarised light to be visible to the image capturing device when required and to display configuration patterns during calibration or image capture, whilst allowing the light from the source of polarised light incident directly on the polarising filter of the image capturing device to be blocked when a photograph is being taken. The method also may include the step of changing the polarisation angle of the polarised filter at the image capturing device and/or the source of polarised light and obtaining additional information about the surface of an object being scanned by analysing the change in brightness caused by the change in the amount of polarised light reflected by surfaces of the object.

The method preferably includes placing the polarising filter in front of the image capturing device, between the source of polarised light and the image capturing device.

The method preferably includes providing a support structure supporting the source of polarised light and the image capturing device.

Preferably, the method comprises the step of independently adjusting height and/or orientation of the source of polarised light and/or the image capturing device.

Preferably, the method includes the step of individually adjusting brightness and/or colour of the source of polarised light. The method preferably comprises the step of allowing the source of polarised light to display or project configurable patterns and using the configurable patterns to calibrate the system or detect position of the image capturing device and 2D to 3D reconstruction process.

Optionally, the method comprises keying the sources of polarised light to minimise the filtering of light from the sources located at the same side as the image capturing device (when viewed from above) and reflected from the object being scanned, while ensuring that the light from the source located directly opposite the image capturing device is blocked by the polarising filter of the image capturing device.

In one arrangement, the method comprises the step of compiling multiple 2D images of an object obtained by the or each image capturing device to create a 3D image of that object.

In one arrangement, the method comprises providing at least one module comprising a body supporting
at least one source of polarised light and
at least one image capturing device having a polarising filter placed in front of the image capturing device
for use with the imaging system.

Preferably, the method comprises providing at least a pair of such modules, and positioning the modules to face each other including
locating the image capturing device of a first module opposite and facing the source of polarised light of the second module;
orienting polarisation planes of the source of polarised light of the second module and the polarising filter of the image capturing device of the first module at a predetermined angle relative to each other;
locating an object between the image capturing device of the first module and the source of polarised light of the second module; and
capturing images of the object.

In one arrangement, the predetermined angle is between 60 and 120. In a further arrangement, the polarisation planes of the source of polarised light of the second module and the polarising filter of the image capturing device of the first module are oriented substantially perpendicular to each other.

The method preferably includes arranging modules around a central area and placing an object to be scanned into the central area. The method preferably includes positioning the modules around the central area so as to capture multiple images of an object around a 360 degree area around the object. Optionally, the method includes placing a plurality of modules around a circumference or an arc.

Preferably, the method comprises the step of adjusting the position of the or each module in the system.

Preferably, the method includes adjustably mounting the source of polarised light and/or the image capturing device on the body of the module. Preferably, the method includes independently adjusting positions of the source of polarised light and the image capturing device on the body of the module. Preferably, the method includes independently adjusting the angles of polarisation of the source of polarised light and/or the polarising filter of image capturing device. Preferably, the method includes independently adjusting height and/or orientation of the source of polarised light and/or the image capturing device. Preferably, the method includes movably mounting the source of polarised light and the polarising filter of the image capturing device on the body. Preferably, the method includes rotating the source of polarised light and/or the polarising filter of the image capturing device on the body to adjust their respective angles of polarisation.

Where a high resolution display panel, such as, for example, an LED or an LCD panel, is used as the source of polarised light, prior to any image scanning taking place, the display panel can be used to calibrate the system. First, the angle of the orientation of the polarised light and the polarising filter of the image capturing device are rotated and aligned such that light emitted by the display panel is visible within the captured images. The display panel is then used to show a specific, unique pattern (an example being a barcode or QR Code), which is subsequently combined with multiple views of the same display panel and used to both identify the source of polarised light and calculate the position of the source of polarised light, and all the respective image capturing devices cameras relative to each other in a 3D space. Similarly, this information can be used to calculate lens parameters such as focal length, colour balance and distortion characteristics. Once calibrated and the positions and orientations of the source of polarised light and the image capturing device known, an object is placed in a central area between the source of polarised light and the image capturing device. The source of polarised light and/or the polarising filter of the image capturing device are then rotated such that the image capturing device which directly faces the source of polarised light has its polarisation plane at a predetermined angle to the polarisation plane of the light from the source. This can be done in a number of ways. Firstly, all sources of polarised light can be rotated to have the same alignment with each other, while the polarising filters of all the image capturing devices are aligned in the same plane as each other and at a predetermined angle to the sources of polarised light. Alternatively, where modules are used, each module can have the alignment of all of its sources of polarised light and image capturing devices adjusted to be aligned in the same plane and rotated in synchronicity and in modules located opposite each other the sources of polarised light and image capturing devices have their alignment at a predetermined angle relative to each other, and, as the case may be, perpendicular to each other. For example, where a plurality of modules are arranged around a central area, the polarisation angle of the source of polarised light and the polarising filter of the image capturing device in each next adjacent module is rotated gradually from a first module at position P=0 to an nth module at position P=n such that sources of polarised light and polarising filters of the image capturing devices in opposing modules have their polarisation planes oriented perpendicular to each other. The angle of rotation of the polarisation plane in each module can be determined using the equation in which the angle of rotation of the polarisation plane A = X/2, where X is the angle between the module in question and the module at position P=0. Where the modules are equally spaced, A = P*(180/n), where n is the number of modules in the system. The angle by which the orientation of the polarisation plane changes in each next adjacent module is relatively small, particularly in highly reflective surfaces. Such an arrangement provides for faster shutter speeds, high ISO settings and the capture of moving objects, while ensuring that the polarisation planes of opposing sources of polarised light and image capturing devices are out of alignment and within + or - 30 degrees of being perpendicular to each other, thereby ensuring that the polarised light emitted by the source polarised light is fully or partially blocked by the polarising filter of the image capturing device to a degree which prevents glare or adverse effects on the captured image.

The present invention makes it possible to take multiple images without the necessity to move the object and provided there is enough time to rotate the polarisation planes of the sources of polarised light and/or the polarising filters of the cameras, multiple images can be taken in which these aspects are modified. Furthermore, brightness changes in the resulting images can be used in conjunction with the known positions of the sources of polarised lights and the image capturing devices and orientations of the planes of polarisation, to extrapolate the orientation, position and colour of the surface of the object.

All essential, preferred or optional features or steps of one of the first, second, third or fourth aspect of the invention can be provided in conjunction with the features of the other of the first, second, third or fourth aspect of the invention and *vice versa.*

The invention provides an imaging system, module, kit and an associated method as defined in the appended claims.

### BRIEF DESCRIPTION OF THE DRAWINGS

Embodiments of the present invention are described hereinafter with reference to the accompanying drawings in which:
Figure 1 shows schematically mutual disposition of polarisation planes of the light source and the image capturing device of the system of the invention;
Figure 2 shows schematically mutual disposition of the light sources and the image capturing device of the system of the invention;
Figure 3 shows a variation of the system of Figure 2 comprising a plurality of modules each module including a light source and an image capturing device;
Figures 4a and 4b are respective schematic front and plan views of a module of Figure 3; and
Figures 5a and 5b are respective schematic front and plan views of an image capturing device employed in the system of the invention.

### DETAILED DESCRIPTION OF THE INVENTION

The following description is exemplary only and does not aim to limit the invention in terms of the physical layout, operation, quantities of components, method of automation or methods of polarisation.

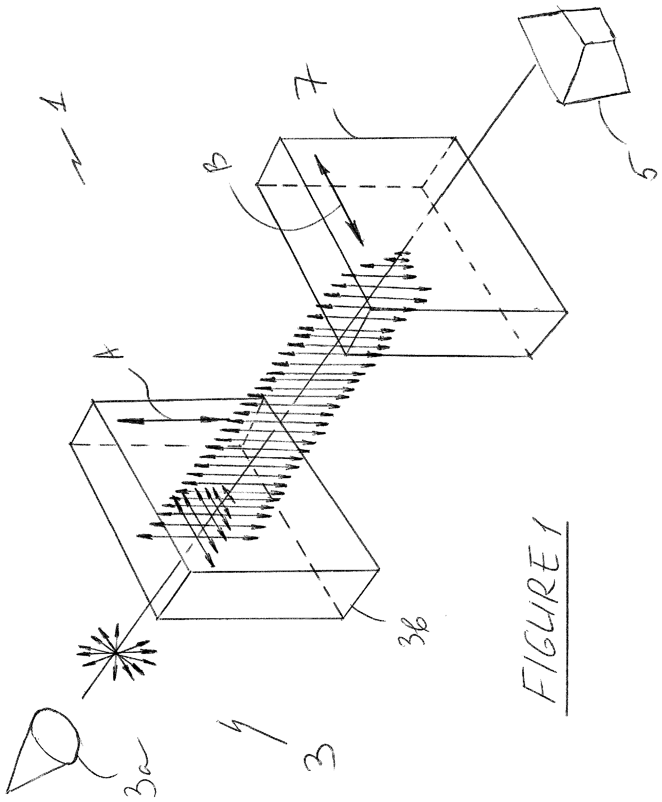

Referring to Figures 1 to 5b, an imaging system in accordance with the invention is indicated generally by reference numeral 1. The imaging system 1, in its basic implementation, comprises a source of polarised light 3, an image capturing device 5 located opposite and facing the source of polarised light 3 and a polarising filter 7 placed in front of the image capturing device 5, between the source of polarised light 3 and the image capturing device 5.

The image capturing device 5 may include a camera, a charge-coupled device (CCD) or a scanner. The source of polarised light 3 can be a source which emits polarised light either by the inherent design and nature of the light, such as, for example, a light emitting diode (LED) or a diode based array or display, a liquid crystal display (LCD) or, as exemplified in Figure 1, a source of non-polarised light 3a and a polarising filter 3b which is capable of polarising light through reflection, transmission or other known techniques. It will be appreciated that various methods of polarisation of light are available and the examples set out herein are not limiting on the present invention.

In the presently described embodiment, but without limitation thereto, the system 1 is a 2D to 3D image building system comprising a processor (not shown) configured to compile multiple 2D images of an object to create a 3D image of that object.

The source of polarised light 3 polarises emitted light in a first polarisation plane indicated by arrow A in Figure 1. The polarising filter 7 of the image capturing device 5 polarises incoming light in a second polarisation plane indicated by arrow B in Figure 1. The polarisation planes of the source of polarised light 3 and the polarising filter 7 of the image capturing device 7 are oriented at a predetermined angle to each other. In the presently described embodiment, the polarisation planes of the source of polarised light 3 and the polarising filter 7 of the image capturing device 7 are oriented substantially perpendicular to each other. In other arrangements, the polarisation planes of the source of polarised light 3 and the polarising filter 7 of the image capturing device 5 may be oriented at an angle between 60 and 120 degrees to each other. As will be described in more detail below, height and/or orientation of the source of polarised light 3 and/or the image capturing device 5 within the system 1 are independently adjustable.

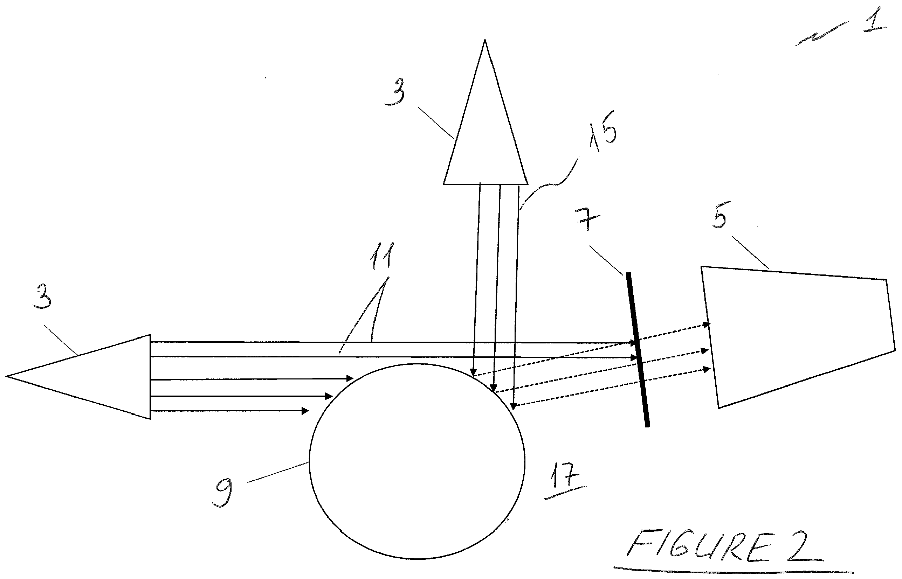

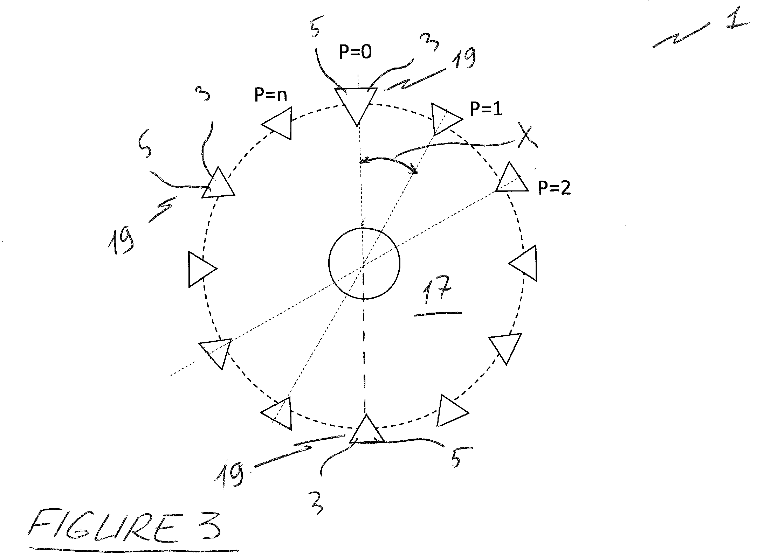

As shown in Figures 2 and 3, the system preferably comprises a plurality of sources of polarised light 3 and a plurality of image capturing devices 5 wherein one or more of the plurality of sources of polarised light 3 has a respective image capturing device 5 placed opposite and facing the source 3. The plurality of sources of polarised light 3 and the respective image capturing devices 5 are preferably positioned around a central area 17 into which an object 9 to be scanned is placed in use. As shown in Figure 3, the plurality of sources of polarised light 3 and the respective image capturing devices 5 can be positioned around the central area 17 so as to capture multiple images of the object 9 around a 360 degree area around the object 9. In such an arrangement, polarised light 11 from the source 3 incident directly on the polarising filter 7 of the image capturing device 5 is filtered out by the polarising filter 7 of the image capturing device 5. On the other hand, other light incident on the polarising filter 7, such as, for example, light 15 emitted from another source 3 of polarised light positioned obliquely with respect to the image capturing device 5 is reflected from the object 9. This light 15, upon reflection, undergoes a change in its angle of polarisation and a portion of this light 15 has its angle of polarisation aligned with that of the polarised filter 7 in front of the image capturing device 5 and is thus visible to and captured by the image capturing device 5.

Where a plurality of the image capturing devices 5 is provided, the image capturing devices 5 may be configured to operate synchronously.

In the arrangement shown in Figure 3, the polarisation angle of each of the source of polarised light 3 and the polarising filter 7 of the image capturing device 5 in each adjacent respective source of polarised light 3 and image capturing device 5 may be changed gradually from each respective first source of polarised light and first image capturing device (position P=0 in Figure 3) to an nth source of polarised light 3 and an nth first image capturing device 5 (position P=n in Figure 3) such that in each pair of the source of polarised light 3 and image capturing device 5 located opposite each other across the central area 17 the polarisation planes of the source of polarised light 3 and the polarising filter 7 of the image capturing device 5 are oriented substantially perpendicular to each other.

In the presently described embodiment, the angle of polarisation of light emitted by the source of polarised light 3 and the angle of the polarising filter 7 at the image capturing device 5 are individually adjustable. This allows the image capturing device 5 to filter selectively light of any angle of polarisation, allowing the source of polarised light 3 to be visible, such as during calibration, or non-visible, such as during image capturing, to the image capturing device 5 at appropriate times. This also allows brightness of the image background to be adjusted by adjusting the angle of polarisation of the source of polarised light 3 or the polarising filter 7 at the image capturing device 5. This also allows the source of polarised light 3 to be visible to the image capturing device 5 when required and to display configuration patterns during calibration or image capture, whilst allowing the light from the source of polarised light 3 incident directly on the polarising filter 7 of the image capturing device 5 to be blocked when a photograph is being taken. In addition, by changing the polarisation angle of the polarised filter 7 at the image capturing device 5 and/or that of the source of polarised light 3, additional information about the surface of the object 9 being scanned can be obtained by analysing the change in brightness caused by the change in the amount of polarised light reflected by surfaces of the object 9.

Referring to Figures 2 to 4a, in the presently described embodiment, the system 1 includes a support structure supporting the source of polarised light 3 and the image capturing device 5. The support structure comprises a module 19 comprising a body 21 supporting one or more sources of polarised light 3 and one or more image capturing devices 5 having a respective polarising filter 7 placed in front of the image capturing device 5. As shown in Figure 3, in the presently described embodiment, the system 1 comprises a plurality of such modules 19 arranged around the central area 19 into which the object 9 to be scanned is placed in use. The modules 19 are arranged in pairs. In each pair, the modules 19 are disposed opposite each other across the central area 17 such that the image capturing device 5 of a first module 19 is located opposite and facing the source of polarised light 3 of the second module 19 and wherein polarisation planes of the source of polarised light 3 of the second module 19 and the polarising filter 7 of the image capturing device 5 of the first module 19 are oriented substantially perpendicular to each other.

The position of each module 19 in the system 1 is adjustable.

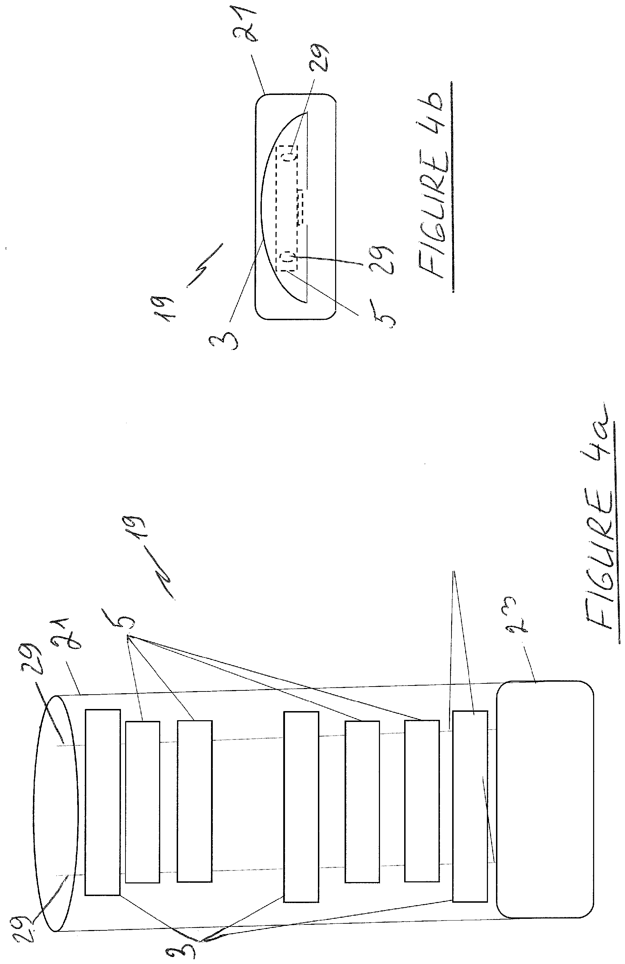

As shown in Figures 4a and 4b, the module 19 of the presently described embodiment comprises a plurality of sources of polarised light 3 and a plurality of image capturing devices 5.

The module 19 may be affixed to the ground via a base plate 23 which supports the body 21 and houses any accompanying power supplies and/or control equipment.

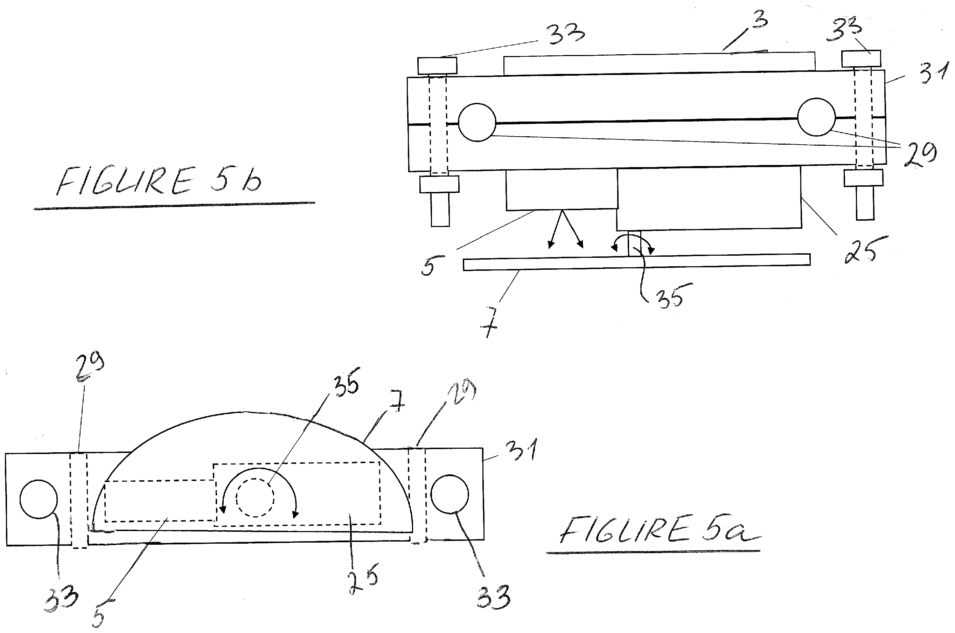

Each source of polarised light 3 and the polarising filter 7 of each image capturing device 5 are movably mounted on the body 21 so that their height and/or orientation can be individually adjusted on the body 21. Each source of polarised light 3 and the polarising filter 7 of each image capturing device 5 are rotatably mounted on the body 21 so that their respective angles of polarisation can be individually adjusted. Servo motors (only one servo motor 25 for rotating the polarising filter 7 is shown in Figures 5a and 5b) are provided for adjusting the positions and polarisation angles of the source of polarised light 3 and the image capturing device 5.

The angle of rotation of the polarisation plane in each source of polarised light 3 and image capturing device 5 in each module 19 can be determined using the equation in which the angle of rotation of the polarisation plane A = X/2, where X is the angle between the module in question and the module at position P=0 when viewed from above. Where the modules are equally spaced, A = P*(180/n), where n is the number of modules in the system 1.

The sources of polarised light 3 and the image capturing devices 5 in each module 19 are movably mounted on guide rods 29, housed within the body 21. The body is preferably made from a lightweight material, such as, for example, polycarbonate or similar.

As shown in Figures 5a and 5b, the image capturing devices 5 are secured to the guide rods 29 by clamps 31 and bolts 33. Each image capturing device is placed behind a polarising filter 7, which is rotatably mounted on a shaft 35 to be rotated by a servo motor 25. Although not shown in the drawings, a similar arrangement can be used to mount the source of polarised light 3 on the module 19.

It will be appreciated that various methods would be apparent to a person skilled in the art of attaching the sources of polarised light 3 and the image capturing devices 5 to the modules 19.

The sources of polarised light 3 can be mounted on the front as well as on the back side of the module (see Figure 5b).

In one configuration of the system 1, inherently polarised light sources 3 (such as a high resolution LCD panel) can be attached to a servo motor thereby allowing the entire polarising light source 3 to be rotated to adjust the angle of polarisation of the projected light.

Although not shown in the drawings, a control unit is provided to control the adjustment of the source of polarised light 3 and the image capturing device 5 on the body 21.

In the presently described embodiment, the system 1 forms a photo booth having walls defined by the modules 19.

The sources of polarised light 3 are preferably individually adjustable in brightness and/or colour. This allows the source of polarised light 3 to display or project configurable patterns which can be displayed in the background and can be used to calibrate the system 1 and assist in detecting position of the image capturing device and 2D to 3D reconstruction process. Optionally, the sources of polarised light 3 can be keyed to minimise the filtering of light from the sources 3 located at the same side as the image capturing device 5 (when viewed from above) and reflected from the object 9 being scanned, while ensuring that the light from the source 3 located directly opposite the image capturing device 5 is blocked by the polarising filter 7 of that image capturing device 5.

The use of the source of polarised light 3 to illuminate the object 9 being scanned and polarising filters 7 at the image capturing devices 5 to block either fully or partially the light coming directly from the source 3 and allowing light reflected from the object 9 to enter the image capturing device 5 allows high power lighting to be employed all around the object 9 and removes the issues associated with glare caused by the image capturing device 5 directly facing light sources 3.

Modifications are possible within the scope of the invention, the invention being defined in the appended claims.

## Claims

1. An imaging system comprising
a source of polarised light
an image capturing device located opposite and facing the source of polarised light; and
a polarising filter placed in front of the image capturing device;
wherein polarisation planes of the source of polarised light and the polarising filter of the image capturing device are oriented at a predetermined angle to each other.

2. An imaging system of claim 1, wherein the polarisation planes of the source of polarised light and the polarising filter of the image capturing device are oriented at an angle between 60 and 120 degrees to each other.

3. An imaging system of claim 1 or claim 2, wherein the system includes a support structure supporting the source of polarised light and the image capturing device;
optionally, wherein the polarisation planes of the source of polarised light and the polarising filter of the image capturing device are oriented substantially perpendicular to each other;
optionally, wherein the angle of polarisation of light emitted by the source of polarised light and/or the angle of the polarising filter at the image capturing device are individually adjustable;
optionally, wherein height and/or orientation of the source of polarised light and/or the image capturing device within the system are independently adjustable;
optionally, wherein positions of the source of polarised light and the image capturing device are independently adjustable on the support structure;
optionally, wherein the source of polarised light and the polarising filter of the image capturing device are movably mounted on the support structure;
optionally, wherein the source of polarised light and/or the polarising filter of the image capturing device are rotatably mounted on the support structure;
optionally, wherein the source of polarised light is individually adjustable in brightness and/or colour;
optionally, wherein the source of polarised light is keyed;
optionally, wherein the image capturing device includes a camera, a charge-coupled device (CCD) or a scanner;
optionally, wherein the source of polarised light is a source which emits polarised light either by the inherent design and nature of the light, including one of a light emitting diode (LED) or a diode based array or display, a liquid crystal display (LCD) or a source of non-polarised light and a polarising filter which is capable of polarising light;
optionally, wherein the system is a 2D to 3D image building system comprising a processor configured to compile multiple 2D images of an object to create a 3D image of that object;
optionally, wherein the system forms a photo booth.

4. An imaging system of claim 3, wherein the source of polarised light and/or the image capturing device are adjustably mounted on the support structure.
optionally, wherein a control arrangement is provided configured to control the adjustment of the source of polarised light and/or the image capturing device on the support structure.

5. An imaging system of any preceding claim, wherein the system comprises a plurality of such sources of polarised light and a plurality of such image capturing devices wherein one or more of the plurality of sources of polarised light has a respective image capturing device placed opposite and facing the source and the remaining image capturing device are positioned obliquely in relation to said source of polarised light;
wherein the plurality of sources of polarised light and the respective image capturing devices are positioned around a central area into which an object to be scanned is placed in use;
optionally, wherein the plurality of sources of polarised light and the respective image capturing devices are positioned around the central area so as to capture multiple images of an object around a 360 degree area around the object;
optionally, wherein the plurality of sources of polarised light and the respective image capturing devices are placed around a circumference or an arc;
optionally, wherein the polarisation angle of each of the source of polarised light and the polarising filter of the image capturing device in each adjacent respective source of polarised light and image capturing device is changed gradually from each respective first source of polarised light and first image capturing device to an nth source of polarised light and an nth first image capturing device such that in each pair of opposing source of polarised light and image capturing device polarisation planes of the source of polarised light and the polarising filter of the image capturing device are oriented at a predetermined angle to each other.

6. An imaging system of any preceding claim, wherein the system comprises one or more modules, the or each module comprising:
a body supporting
at least one source of polarised light and
at least one image capturing device having a polarising filter placed in front of the image capturing device;
optionally, wherein the system comprises at least a pair of said modules, wherein the modules are disposed facing each other such that the image capturing device of a first module is located opposite and facing the source of polarised light of the second module to capture images of an object located between the image capturing device of the first module and the source of polarised light of the second module; wherein polarisation planes of the source of polarised light of the second module and the polarising filter of the image capturing device of the first module are oriented at a predetermined angle relative to each other;
optionally, wherein the position of the or each module in the system is adjustable.
optionally, wherein the system forms a photo booth and the photo booth has walls defined by the or each module.

7. A module of the system of any one of claims 1 to 5, the module comprising
a body supporting
at least one source of polarised light and
at least one image capturing device having a polarising filter placed in front of the image capturing device;
optionally, wherein the module comprises a plurality of such sources of polarised light and a plurality of such image capturing devices.

8. A kit of parts for assembling an imaging system of any one of claims 1 to 6, the kit comprising:
a source of polarised light
an image capturing device for location opposite and facing the source of polarised light; and
a polarising filter placed in front of the image capturing device;
wherein polarisation planes of the source of polarised light and the polarising filter of the image capturing device are adapted to be oriented at a predetermined angle relative to each other.

9. A kit of parts of claim 8, wherein the polarisation planes of the source of polarised light and the polarising filter of the image capturing device are adapted to be oriented at an angle between 60 and 120 degrees to each other or substantially perpendicular to each other.

10. A method of obtaining images, the method comprising the steps of:
providing an imaging system comprising
a source of polarised light
an image capturing device having a polarising filter placed in front of the image capturing device;
positioning the image capturing device and the source of polarised light opposite and facing each other; and
orienting polarisation planes of the source of polarised light and the polarising filter of the image capturing device at a predetermined angle relative to each other.

11. A method of claim 10, wherein the predetermined angle is between 60 and 120.

12. A method of claim 10 or claim 11, the method further comprising the steps of locating an object in an area between the image capturing device and the source of polarised light and capturing one or more images of the object with the image capturing device;
optionally, the method comprising the step of compiling multiple 2D images of an object obtained by the image capturing device to create a 3D image of that object.

13. A method of any one of claims 10 to 12, the method comprising filtering out the polarised light from the source incident directly on the polarising filter of the image capturing device by the polarising filter of the image capturing device and polarising other light incident on the polarising filter by the polarising filter and capturing the polarised light by the image capturing device;
optionally, the method comprising:
providing a plurality of such sources of polarised light and a plurality of such image capturing devices and placing a respective image capturing device opposite and facing one or more of the plurality of sources of polarised light;
filtering out the polarised light from the source of polarised light located in front of an image capturing device and incident directly on the polarising filter of the image capturing device by the polarising filter of the image capturing device; and
polarising light from the remaining sources of polarises light reflected from an object positioned in front of the image capturing device by the polarising filter of the image capturing device and capturing the polarised light by the image capturing device.

14. A method of any one of claims 10 to 13, the method including the steps of changing the polarisation angle of the polarised filter at the image capturing device and/or the source of polarised light and obtaining additional information about the surface of an object being scanned by analysing the change in brightness caused by the change in the amount of polarised light reflected by surfaces of the object.

15. A method of any one of claims 10 to 14, the method including the steps of individually adjusting brightness and/or colour of the source of polarised and allowing the source of polarised light to display or project configurable patterns and using the configurable patterns to calibrate the system or detect position of the image capturing device and 2D to 3D reconstruction process.
